# EUROPÄISCHE PATENTSCHRIFT

(11) **EP 2 829 363 B1**
(45) Veröffentlichungstag und Bekanntmachung des Hinweises auf die Patenterteilung: **15.02.2017**
(21) Anmeldenummer: 14002514.9
(22) Anmeldetag: 19.07.2014
(51) Int. Cl.: B25F 5/00

(54) **Handgeführtes Arbeitsgerät**
Manually operated work device
Appareil de travail portatif

(30) Priorität: 27.07.2013 DE 102013012511
(43) Veröffentlichungstag der Anmeldung: 28.01.2015
(73) Patentinhaber: Andreas Stihl AG & Co. KG, 71336 Waiblingen (DE)
(72) Erfinder: Kurzenberger, Jan, 73257 Köngen (DE); Knauß, Jens, 73630 Remshalden (DE); Menzel, Johannes, 73249 Wernau/Neckar (DE); Friedrich, Sebastian, 71404 Korb (DE)
(74) Vertreter: Reinhardt, Annette

(56) Entgegenhaltungen:
- DE-A1- 10 361 295
- DE-A1-102010 011 986
- US-A1- 2002 073 558

## Beschreibung

Die Erfindung betrifft ein handgeführtes Arbeitsgerät der im Oberbegriff des Anspruchs 1 angegebenen Gattung.

Aus der DE 10 2007 022 115 A1 ist ein handgeführtes Arbeitsgerät, nämlich eine Motorsäge bekannt, bei der Griffeinheit und Motoreinheit über mehrere Antivibrationselemente voneinander schwingungsentkoppelt sind. Einige Antivibrationselemente weisen Schraubenfedern auf, in deren Enden Stopfen zur Befestigung an Motoreinheit und Griffeinheit festgelegt sind.

Aus der DE 101 24 621 A1 ist ein Betriebsmitteltank für ein handgeführtes Arbeitsgerät bekannt, bei dem Dämpfungselemente auf am Betriebsmitteltank angeordneten Zapfen aufgesteckt sind. Um eine Beschädigung des Betriebsmitteltanks bei einem Abriss des Zapfens zu vermeiden, ist eine Sollbruchstelle zwischen dem Zapfen und der Wand des Betriebsmitteltanks vorgesehen. Bei einer Beschädigung des Zapfens muss allerdings der gesamte Betriebsmitteltank ausgetauscht werden.

Aus der DE 103 61 295 A1 ist ein handgeführtes Arbeitsgerät der im Oberbegriff des Anspruchs 1 angegebenen Gattung bekannt.

Der Erfindung liegt die Aufgabe zugrunde, ein handgeführtes Arbeitsgerät der gattungsgemäßen Art zu schaffen, das einen vorteilhaften Aufbau besitzt.

Diese Aufgabe wird durch ein handgeführtes Arbeitsgerät mit den Merkmalen des Anspruchs 1 gelöst.

Das Arbeitsgerät besitzt eine Motoreinheit und eine Griffeinheit, die über mindestens ein Antivibrationselement schwingungsentkoppelt ist. Das Antivibrationselement ist über eine Halteeinrichtung an einem ersten Bauteil der Griffeinheit und über ein Halteelement an einem zweiten Bauteil der Motoreinheit festgelegt. Es ist eine Sollbruchstelle an einem dritten Bauteil vorgesehen, wobei das dritte Bauteil unabhängig von dem ersten und dem zweiten Bauteil austauschbar ist. Die Verbindung des ersten Bauteils mit dem zweiten Bauteil weist dabei an der Sollbruchstelle die geringste Festigkeit auf. Dadurch ist sichergestellt, dass bei einer Überlastung das dritte Bauteil an der Sollbruchstelle bricht. Eine Beschädigung oder Zerstörung des ersten Bauteils oder des zweiten Bauteils, also der Bauteile von Griffeinheit und Motoreinheit, die über das Antivibrationselement miteinander verbunden sind, ist vermieden. Dadurch, dass das dritte Bauteil unabhängig von dem ersten Bauteil und dem zweiten Bauteil austauschbar ist, ist ein einfacher Austausch des dritten Bauteils bei Beschädigung oder Zerstörung möglich. Das erste Bauteil und das zweite Bauteil sind insbesondere Gehäusebauteile von Griffeinheit und Motoreinheit, deren Austausch aufwändig ist und die Demontage weiterer Komponenten des Arbeitsgeräts erfordert. Durch die Anordnung einer definierten Sollbruchstelle an einem dritten, unabhängig von der Griffeinheit und der Motoreinheit austauschbaren Bauteil ist die Reparatur des Arbeitsgeräts vereinfacht.

Die Festigkeit an der Sollbruchstelle ist vorteilhaft in allen im Betrieb üblicherweise auftretenden Belastungsrichtungen, insbesondere in allen Raumrichtungen geringer als die Festigkeit aller weiteren Bauteile in der Verbindung von erstem und zweitem Bauteil. Auch die Festigkeit des ersten und des zweiten Bauteils ist an der Verbindung mit dem Antivibrationselement höher als die Festigkeit des dritten Bauteils an der Sollbruchstelle. Die im Betrieb üblicherweise auftretenden Belastungsrichtungen sind dabei insbesondere Belastungen quer zur Längsmittelachse des Antivibrationselements, die Scherkräfte auf die Bauteile der Verbindung ausüben, und Belastungen in Richtung der Längsmittelachse des Antivibrationselements, die Zugkräfte auf die Bauteile der Verbindung ausüben.

Vorteilhaft ist die Sollbruchstelle des Halteelements durch eine Kerbe gebildet. Über eine Kerbe kann auf einfache Weise eine definierte Sollbruchstelle erzeugt werden. Die Kerbwirkung in der Kerbe stellt sicher, dass das Halteelement an der Sollbruchstelle reißt und nicht in einem anderen Bereich. Der Winkel zwischen den Seitenwänden der Kerbe ist dabei vorteilhaft kleiner als 90°, insbesondere kleiner als 45°. Dadurch wird eine gute Kerbwirkung erreicht. Die Kerbe ist vorteilhaft so angeordnet, dass die Längsmittelachse des Antivibrationselements in unbelastetem Zustand des Antivibrationselements durch die Kerbe verläuft. Dadurch werden Kräfte in Richtung der Längsmittelachse unmittelbar in die Kerbe eingeleitet. Vorteilhaft beträgt die Tiefe der Kerbe mindestens 20% der parallel zur Tiefe der Kerbe gemessenen Breite eines an die Kerbe angrenzenden Abschnitts des dritten Bauteils. Die Tiefe der Kerbe beträgt insbesondere mindestens 40% der parallel zur Tiefe der Kerbe gemessenen Breite des an die Kerbe angrenzenden Abschnitts des dritten Bauteils. Die Breite des an die Kerbe angrenzenden Abschnitts des dritten Bauteils ist dabei die geringste Breite des an die Kerbe angrenzenden Abschnitts des dritten Bauteils und verläuft etwa in Richtung der Bruchlinie, entlang der das dritte Bauteil bricht.

Vorteilhaft ist der Fuß, also der Kerbgrund der Kerbe, etwa in Längsrichtung des Arbeitsgeräts ausgerichtet. Ist das Arbeitsgerät eine Motorsäge mit einer an einer Führungsschiene umlaufend angeordneten Sägekette, so verläuft der Kerbgrund vorteilhaft parallel zur Ebene der Führungsschiene.

Das Halteelement ist an der Motoreinheit vorteilhaft lösbar fixiert. Vorteilhaft weist das Halteelement die Sollbruchstelle auf, wobei die Festigkeit des Halteelements an der Sollbruchstelle geringer als die Festigkeit der Halteeinrichtung ist. Das Halteelement bildet das dritte Bauteil. Dadurch, dass das Halteelement, über das das Antivibrationselement an der Motoreinheit festgelegt ist, die Sollbruchstelle aufweist, kann bei einer Überlastung des Antivibrationselements im Betrieb sichergestellt werden, dass das Halteelement an der Motoreinheit an der Sollbruchstelle bricht. Dadurch kann eine Beschädigung der Halteeinrichtung, mit der das Antivibrationselement an der Griffeinheit festgelegt ist, vermieden werden. Ist das Halteelement fest mit der Griffeinheit verbunden, so kann ein Austausch von Teilen der Griffeinheit dadurch vermieden werden. Das Halteelement kann dadurch, dass es an der Motoreinheit lösbar fixiert ist, auf einfache Weise ausgetauscht werden. Dadurch sind Reparaturen einfach möglich. Das dritte Bauteil kann jedoch auch ein anderes Bauteil der Verbindung, beispielsweise ein Befestigungselement des Halteelements sein.

Es kann auch vorgesehen sein, dass die Halteeinrichtung lösbar an der Griffeinheit fixiert ist und dass die Halteeinrichtung die Sollbruchstelle aufweist.

Das Antivibrationselement umfasst vorteilhaft eine Schraubenfeder. Die Längsmittelachse des Antivibrationselements ist vorteilhaft die Längsmittelachse der Schraubenfeder. Vorteilhaft besitzt das Halteelement einen Befestigungsabschnitt zur Befestigung an der Motoreinheit und einen Gewindeabschnitt zur Befestigung an der Schraubenfeder. Die Sollbruchstelle ist vorteilhaft zwischen dem Befestigungsabschnitt und dem Gewindeabschnitt vorgesehen. Dadurch wird die Schraubenfeder bei einem Bruch des Halteelements an der Sollbruchstelle sicher von der Motoreinheit getrennt, so dass über das Antivibrationselement keine Kräfte mehr zwischen Motoreinheit und Griffeinheit übertragen werden können. Dies ist wünschenswert, um die Beschädigung weiterer angrenzender Teile des Arbeitsgeräts, die einen aufwendigen Austausch erfordern, zu verhindern. Ein einfacher Aufbau ergibt sich, wenn der Gewindeabschnitt ein Außengewinde trägt und in die Schraubenfeder eingeschraubt ist. Das Halteelement ist vorteilhaft als in die Schraubenfeder eingeschraubter Stopfen ausgebildet.

Eine einfache Fixierung des Halteelements wird ermöglicht, wenn das Halteelement eine schlitzförmige Aufnahme besitzt, in die ein Befestigungssteg der Motoreinheit ragt. Dadurch wird eine einfache Positionierung des Halteelements an dem Befestigungssteg der Motoreinheit bei der Montage des Antivibrationselements ermöglicht. Vorteilhaft besitzt der Befestigungssteg ein Dach, das das Halteelement mindestens teilweise übergreift. Das Dach ermöglicht eine Vorpositionierung des Halteelements bei der Montage. Das Dach bildet vorteilhaft einen Anschlag für das Halteelement, so dass das Halteelement bei der Montage einfach mit einer Hand positioniert und mit der anderen Hand befestigt werden kann.

Die Aufnahme wird vorteilhaft von dem Befestigungsabschnitt begrenzt, wobei die Kerbe sich von der der Aufnahme zugewandten Seite des Befestigungsabschnitts in das Halteelement erstreckt. Dadurch ergibt sich ein kompakter Aufbau, und Kräfte vom Befestigungssteg können unmittelbar in das Halteelement eingeleitet werden. Die Längsmittelachse des Antivibrationselements ist dabei vorteilhaft in unmittelbarer räumlicher Nähe der Aufnahme angeordnet, so dass sich eine gute Krafteinleitung ergibt.

Vorteilhaft ist die Aufnahme an der dem Befestigungsabschnitt gegenüberliegenden Seite von einem Seitensteg begrenzt. Der Seitensteg weist vorteilhaft eine Öffnung auf, durch die ein Befestigungselement ragt. Der dem Gewindeabschnitt abgewandte Bereich des Seitenstegs ist dabei vorteilhaft gegenüber dem dem Gewindeabschnitt zugewandten Bereich auf die dem Befestigungsabschnitt abgewandte Seite versetzt. Durch die Öffnung im Seitensteg kann das Befestigungselement einfach montiert und festgezogen werden. Der Versatz der beiden Bereiche des Seitenstegs zueinander stellt sicher, dass der dem Gewindeabschnitt abgewandte Bereich des Seitenstegs bei einem Bruch des Halteelements an der Sollbruchstelle nicht an dem Befestigungselement hängen bleiben und dadurch eine Wirkverbindung zwischen Motoreinheit und Griffeinheit herstellen kann. Solange das Befestigungselement noch nicht vollständig montiert ist, kann der Seitensteg am Befestigungselement aufliegen, wodurch die Montage erleichtert wird.

Vorteilhaft umfasst die Halteeinrichtung einen in die Schraubenfeder eingeschraubten Gewindeabschnitt. Das Halteelement weist vorteilhaft eine Aufnahme für eine Abreißsicherung auf. Die Aufnahme für die Abreißsicherung ist dabei vorteilhaft im Gewindeabschnitt des Halteelements vorgesehen. Dadurch ist sichergestellt, dass Motoreinheit und Griffeinheit nach einem Bruch des Halteelements an der Sollbruchstelle auch über die Abreißsicherung nicht weiter verbunden sind.

Vorteilhaft umfasst die Griffeinheit einen Betriebsmitteltank, der das erste Bauteil, an dem das Antivibrationselement festgelegt ist, bildet. Die Halteeinrichtung ist vorteilhaft an dem Betriebsmitteltank ausgebildet. Dadurch, dass die Halteeinrichtung unmittelbar an dem Betriebsmitteltank ausgebildet ist, also kein separates Bauteil ist, ergibt sich ein einfacher Aufbau. Da eine Fixiereinrichtung für die Halteeinrichtung an dem Betriebsmitteltank entfällt, kann der Betriebsmitteltank insgesamt mit geringerer Bauhöhe ausgeführt werden. Durch die Sollbruchstelle am Halteelement kann vermieden werden, dass die Halteeinrichtung am Betriebsmitteltank bei nicht bestimmungsgemäßem Gebrauch des Arbeitsgeräts beschädigt werden kann. Die Sollbruchstelle stellt sicher, dass das Antivibrationselement bei Überlastung am separaten Halteelement und nicht an der Halteeinrichtung am Betriebsmitteltank reißt.

Die Halteeinrichtung ist vorteilhaft an einer in einer Abstellposition des Arbeitsgeräts nach oben weisenden Oberseite des Betriebsmitteltanks angeordnet. Der Betriebsmitteltank ist vorteilhaft benachbart zu einem hinteren Handgriff des Arbeitsgeräts angeordnet. Insbesondere, wenn das Arbeitsgerät eine Motorsäge, ein Trennschleifer oder dgl. mit einem hinteren Handgriff ist, können vom Bediener am Handgriff sehr große Kräfte, insbesondere Querkräfte und/oder Zugkräfte auf ein an der Oberseite des Betriebsmitteltanks angeordnetes Antivibrationselement ausgeübt werden, beispielsweise wenn das Werkzeug im Betrieb einklemmt und das Arbeitsgerät vom Bediener dennoch weiter betrieben wird. Durch die vorgesehene Sollbruchstelle kann eine Beschädigung benachbarter Bauteile bei Überbeanspruchung des Antivibrationselements vermieden werden, da das Halteelement an der Sollbruchstelle bricht, bevor andere Bauteile beschädigt werden können. Die Festigkeit des Halteelements an der Sollbruchstelle ist dabei vorteilhaft größer als die in bestimmungsgemäßem Betrieb auftretenden Kräfte, so dass bei bestimmungsgemäßem Betrieb ein Bruch des Antivibrationselements an der Sollbruchstelle sicher vermieden ist.

Ein Ausführungsbeispiel der Erfindung wird im Folgenden anhand der Zeichnung erläutert. Es zeigen:
- Fig. 1: eine schematische Seitenansicht einer Motorsäge,
- Fig. 2 und Fig. 3: perspektivische Darstellungen der Motorsäge mit abgenommener Haube,
- Fig. 4: eine perspektivische Explosionsdarstellung eines Antivibrationselements der Motorsäge,
- Fig. 5: eine Explosionsdarstellung von Halteelement und Schraubenfeder des Antivibrationselements aus Fig. 4 in Seitenansicht,
- Fig. 6: eine Seitenansicht von Halteelement, Schraubenfeder und Abreißsicherung des Antivibrationselements,
- Fig. 7: eine Seitenansicht in Richtung des Pfeils VII in Fig. 5,
- Fig. 8: eine Seitenansicht in Richtung des Pfeils VIII in Fig. 6,
- Fig. 9: eine vergrößerte Schnittdarstellung durch das Antivibrationselement an der Motorsäge.

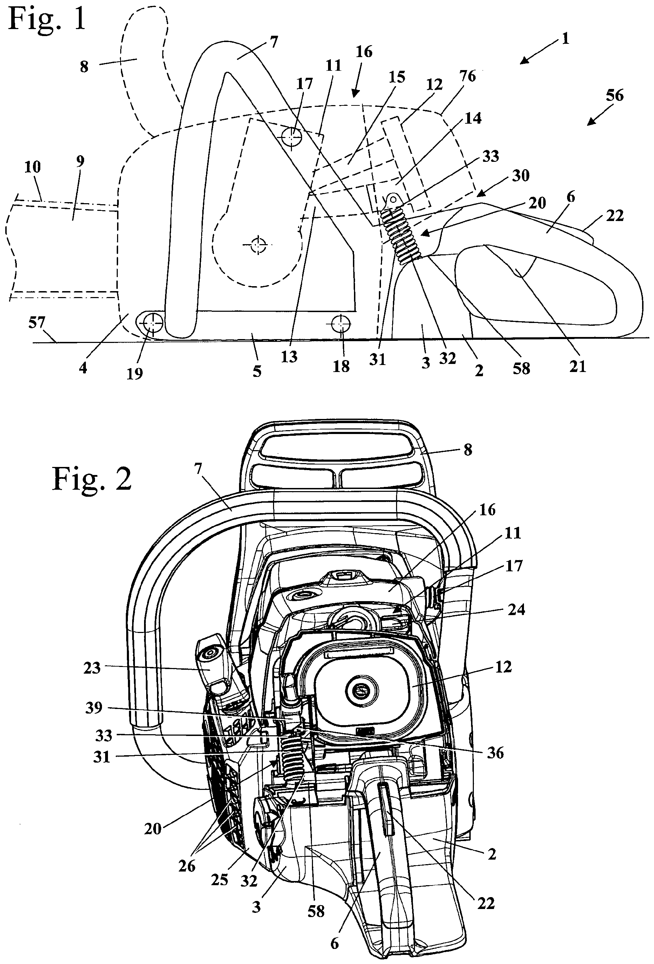

Fig. 1 zeigt schematisch eine Motorsäge 1 als Ausführungsbeispiel für ein handgeführtes Arbeitsgerät. Das handgeführte Arbeitsgerät kann jedoch auch ein anderes handgeführtes Arbeitsgerät wie beispielsweise ein Trennschleifer oder dgl. sein. Die Motorsäge 1 besitzt eine Griffeinheit 2 und eine von der Griffeinheit 2 über einen Schwingspalt 30 entkoppelte Motoreinheit 16. In Fig. 1 ist die Motoreinheit 16 der besseren Übersicht halber mit gestrichelter Linie gezeichnet und die Griffeinheit 2 mit durchgezogener Linie. Die Griffeinheit 2 umfasst einen hinteren Handgriff 6 sowie einen Griffbügel 7. Der Griffbügel 7 übergreift ein Gehäuse 4 der Motorsäge 1. Die Griffeinheit 2 umfasst einen Kraftstofftank 3, der benachbart zum hinteren Handgriff 6 angeordnet ist. Die Griffeinheit 2 besitzt außerdem einen sich in Längsrichtung der Motorsäge 1 erstreckenden Steg 5. An dem Steg 5 sind Antivibrationselemente 18 und 19 gehalten. Vorteilhaft sind zwei Antivibrationselemente 18 und zwei Antivibrationselemente 19 vorgesehen, die jeweils beidseitig des Stegs 5 zwischen Griffeinheit 2 und Motoreinheit 16 angeordnet sind.

Ein weiteres Antivibrationselement 17 ist zwischen einem im Gehäuse 4 angeordneten Antriebsmotor 11 und dem Griffbügel 7 angeordnet. Die Antivibrationselemente 17, 18, 19 können eine oder mehrere Schraubenfedern und/oder Dämpfungselemente aus Kunststoff, beispielsweise aus Gummi oder aus Formschaum umfassen. Der Antriebsmotor 11 ist Teil der Motoreinheit 16 und im Ausführungsbeispiel oberhalb des Stegs 5 angeordnet. Im Ausführungsbeispiel ist der Antriebsmotor 11 ein Verbrennungsmotor. Vorteilhaft ist der Antriebsmotor 11 ein Einzylindermotor, insbesondere ein Zweitaktmotor oder ein gemischgeschmierter Viertaktmotor. Im Ausführungsbeispiel ist der Antriebsmotor 11 als Spülvorlagenmotor ausgebildet. Der Antriebsmotor 11 besitzt einen Luftkanal 15, über den Spülvorlagenluft über einen Luftfilter 12 angesaugt wird. Außerdem besitzt der Antriebsmotor 11 einen Ansaugkanal 13 zur Zufuhr von Kraftstoff/Luft-Gemisch. Ein Abschnitt des Ansaugkanals 13 ist in einem Vergaser 14 ausgebildet, über den dem Antriebsmotor 11 Kraftstoff zugeführt wird.

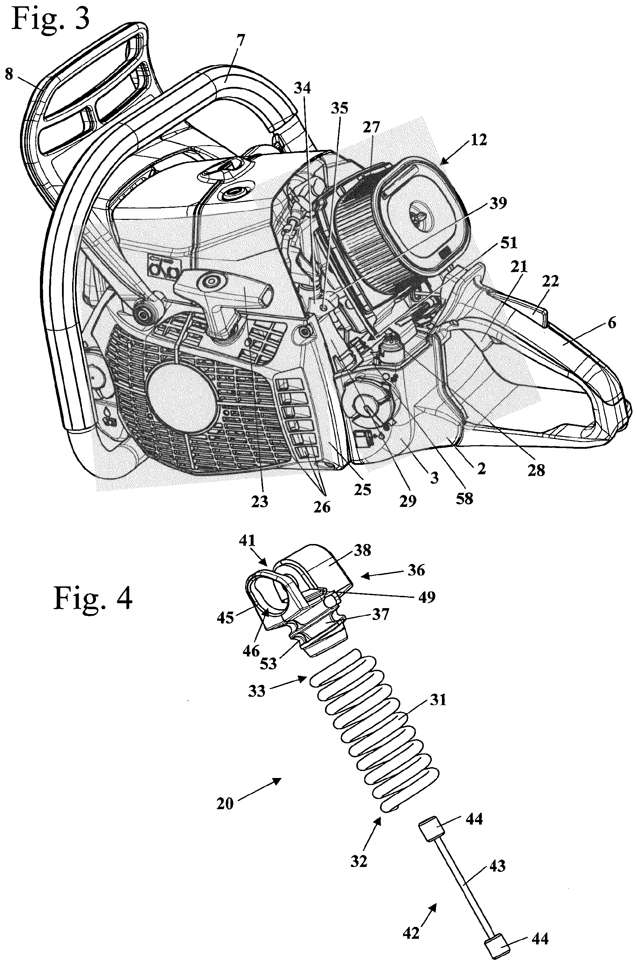

Am hinteren Handgriff 6 sind ein Gashebel 21 zur Bedienung des Antriebsmotors 11 sowie eine Gashebelsperre 22 schwenkbar gelagert. An der dem hinteren Handgriff 6 abgewandten Seite des Gehäuses 4 ragt eine Führungsschiene 9 nach vorn, an der eine Sägekette 10 umlaufend angeordnet ist. Die Sägekette 10 ist von dem Antriebsmotor 11 angetrieben. An der der Sägekette 10 zugewandten Seite des Griffbügels 7 erstreckt sich ein Handschutzbügel 8. Der Handschutzbügel 8 kann am Gehäuse 4 schwenkbar gelagert sein und zum Auslösen einer nicht gezeigten Bremseinrichtung für die Sägekette 10 dienen. Wie Fig. 1 zeigt, besitzt das Gehäuse 4 eine Haube 67, die den Luftfilter 12 abdeckt. In den Figuren 2 und 3 ist die Haube 67 abgenommen.

Ein weiteres Antivibrationselement 20 ist benachbart zum Kraftstofftank 3 an der Griffeinheit 2 festgelegt. In Fig. 1 ist die Motorsäge 1 in einer Abstellposition 56 gezeigt, in der die Motorsäge 1 auf einer ebenen, horizontalen Abstellfläche 57 steht. Der Kraftstofftank 3 besitzt eine Oberseite 58, die in Abstellposition 56 nach oben weist. Das Antivibrationselement 20 ist mit einem ersten Ende 32 an der Oberseite 58 des Kraftstofftanks 3 an der Griffeinheit 2 festgelegt. Mit seinem zweiten Ende 33 ist das Antivibrationselement 20 an der Motoreinheit 16 fixiert, wie im Folgenden noch näher beschrieben wird. Wie Fig. 1 auch zeigt, umfasst das Antivibrationselement 20 eine Schraubenfeder 31.

Wie Fig. 2 zeigt, besitzt der Antriebsmotor 11 einen Zylinder 24, an dem das Antivibrationselement 17 fixiert ist. Zum Starten des Antriebsmotors 11 dient eine nicht gezeigte, unter einer Lüfterradabdeckung 25 angeordnete Anwerfvorrichtung. Ein Anwerfgriff 23 der Anwerfvorrichtung ragt aus dem Gehäuse 4 der Motorsäge 1 hinaus. Wie Fig. 2 auch zeigt, besitzt die Lüfterradabdeckung 25 eine Vielzahl von Kühlluftöffnungen 26, durch die Kühlluft für den Antriebsmotor 11 ins Gehäuse 4 angesaugt wird.

Fig. 2 zeigt auch die Anordnung des Antivibrationselements 20 an der Oberseite 58 des Kraftstofftanks 3 im Einzelnen. In Fig. 2 sind der Luftfilter 12 und das Antivibrationselement 20 aufgrund der abgenommenen Haube 67 sichtbar. Wie die Figuren 1 und 2 zeigen, ist die Schraubenfeder 31 des Antivibrationselements 20 in Längsrichtung der Motorsäge 1, also etwa parallel zur Ebene der Führungsschiene 9 ausgerichtet und mit seinem zweiten Ende 33 nach vorne geneigt. In Längsrichtung der Motorsäge 1 liegt das zweite Ende 33 damit vor dem ersten Ende 32 des Antivibrationselements 20.

Fig. 3 zeigt die Anordnung ohne die Schraubenfeder 31 des Antivibrationselements 20. Wie Fig. 3 zeigt, ist an der Oberseite 58 des Kraftstofftanks 3 eine Halteeinrichtung 51 angeordnet, die als Stopfen mit einer am Außenumfang des Stopfens wendelförmig verlaufenden Nut ausgebildet ist. Im Ausführungsbeispiel ist die Halteeinrichtung 51 fest am Kraftstofftank 3 gehalten, insbesondere einstückig mit dem Kraftstofftank 3 ausgebildet. Wie Fig. 3 zeigt, ist die Halteeinrichtung 51 benachbart zu einem an der Oberseite 58 des Kraftstofftanks 3 angeordneten Belüftungsventil 28 angeordnet. In Fig. 3 ist auch das Filtermaterial 27 des Luftfilters 12 sichtbar. In die Halteeinrichtung 51 ist die Schraubenfeder 31 des Antivibrationselements 20 eingeschraubt (Fig. 2). Die wendelförmige Nut der Halteeinrichtung 51 bildet ein Außengewinde. Das Gehäuse 4 besitzt benachbart zur Lüfterradabdeckung 25 eine Wand 29, an der ein Befestigungssteg 34 angeordnet ist. Der Befestigungssteg 34 besitzt eine Befestigungsöffnung 35 für ein in Fig. 3 nicht gezeigtes Halteelement 36 des Antivibrationselements 20. Das Halteelement 36 ist in Fig. 2 teilweise sichtbar und in Fig. 4 perspektivisch dargestellt. Im Ausführungsbeispiel ist die Befestigungsöffnung 35 eine Gewindebohrung. Der Befestigungssteg 34 besitzt außerdem ein Dach 39, das das Halteelement 36 übergreift, wie auch in Fig. 2 dargestellt ist. Das Dach 39 bildet einen Anschlag für das Halteelement 36 bei der Montage.

Fig. 4 zeigt den Aufbau des Antivibrationselements 20 ohne die Halteeinrichtung 51 im Einzelnen. Das Halteelement 36 besitzt einen Gewindeabschnitt 37, der zur Befestigung an der Schraubenfeder 31 dient. Der Gewindeabschnitt 37 besitzt ein Außengewinde 53, das als wendelförmige Nut ausgebildet ist und auf das die Schraubenfeder 31 mit ihrem zweiten Ende 33 aufgeschraubt ist. Das Halteelement 36 besitzt einen Befestigungsabschnitt 38 zur Befestigung an der Griffeinheit 2, nämlich am Befestigungssteg 34 des Gehäuses 4. Zwischen dem Gewindeabschnitt 37 und dem Befestigungsabschnitt 38 ist eine Kerbe 49 angeordnet, die eine Sollbruchstelle des Antivibrationselements 20 bildet. Das Halteelement 36 besitzt eine Aufnahme 41 für den Befestigungssteg 34, die an einer Seite vom Befestigungsabschnitt 38 und an der gegenüberliegenden Seite von einem Seitensteg 45 begrenzt ist. Der Seitensteg 45 besitzt eine Öffnung 46, durch die ein Befestigungselement für das Halteelement 36 montiert werden kann.

Wie Fig. 4 auch zeigt, besitzt das Antivibrationselement 20 eine Abreißsicherung 42, die ein Sicherungsseil 43 umfasst. Das Sicherungsseil 43 ist vorteilhaft ein schubsteifes Seil wie beispielsweise ein Stahlseil. Das Sicherungsseil 43 besitzt an jedem Ende einen fest mit dem Sicherungsseil 43 verbundenen Nippel 44. Bei einem Bruch der Schraubenfeder 31 wird das Halteelement 36 von der Abreißsicherung 42 an der Halteeinrichtung 51 gehalten, so dass Griffeinheit 2 und Motoreinheit 16 über die Abreißsicherung 42 miteinander verbunden bleiben.

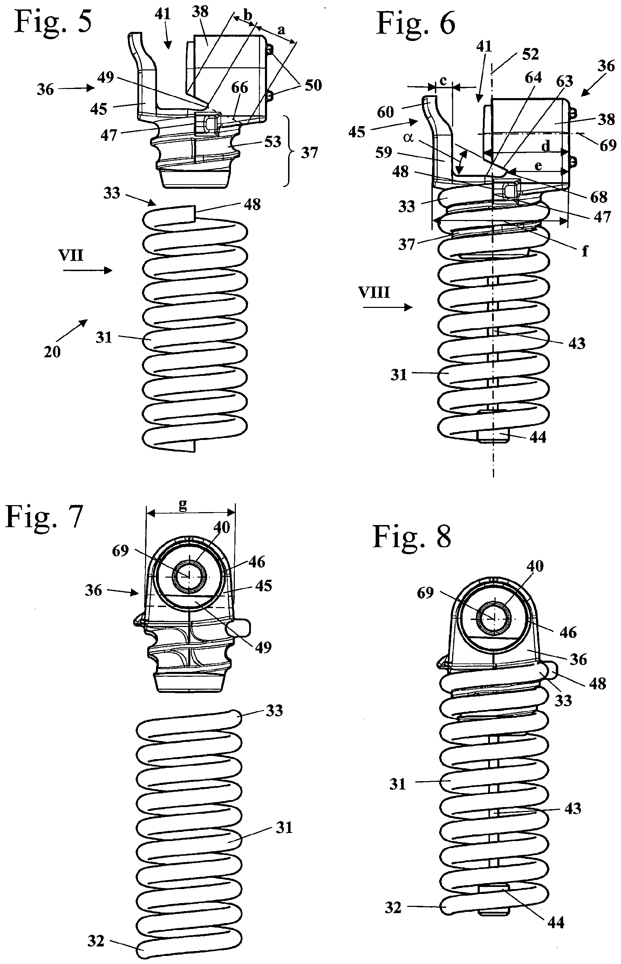

Die Figuren 5 bis 8 zeigen den Aufbau des Antivibrationselements 20 ohne die am Kraftstofftank 3 angeformte Halteeinrichtung 51 im Einzelnen. Wie Fig. 5 zeigt, besitzt der Gewindeabschnitt 37 einen Endanschlag 47. Wie Fig. 8 zeigt, liegt eine Endfläche 48 am zweiten Ende 33 der Schraubenfeder 31 am Endanschlag 47 an, wenn die Schraubenfeder 31 auf den Gewindeabschnitt 37 aufgeschraubt, das Antivibrationselement 20 also montiert ist. Wie die Figuren 5 und 6 zeigen, ist die Aufnahme 41 näherungsweise U-förmig. Die Kerbe 49 ist am Boden der Aufnahme 41 angeordnet und erstreckt sich vom Boden der Aufnahme 41 in dem Bereich zwischen Gewindeabschnitt 37 und Befestigungsabschnitt 38. In Fig. 5 ist die Bruchlinie 66 mit gestrichelter Linie eingezeichnet. An der Bruchlinie 66 brechen der Befestigungsabschnitt 38 und der Gewindeabschnitt 37 auseinander, wenn das Antivibrationselement in Richtung seiner in Fig. 6 gezeigten Längsmittelachse 52 über die im bestimmungsgemäßen Betrieb hinaus auftretenden Kräfte belastet wird. Die Festigkeit des Halteelements 36 in Richtung der Längsmittelachse 52 des Antivibrationselements 20 ist an der Sollbruchstelle dabei geringer als die Festigkeit der Halteeinrichtung 51 in Richtung der Längsmittelachse 52 des Antivibrationselements 20, so dass das Halteelement 36 an der Sollbruchstelle bricht, bevor die Halteeinrichtung 51 beschädigt wird. Die Längsmittelachse 52 entspricht dabei der Längsmittelachse der Schraubenfeder 31.

Wie Fig. 5 zeigt, ist die Tiefe b der Kerbe 49 kleiner als die Breite a des Halteelements 36 an der Bruchlinie 66. Die Tiefe b beträgt vorteilhaft mindestens 20% der Breite a. Insbesondere beträgt die Tiefe b mindestens 40% der Breite a. Die Tiefe b und die Breite a sind dabei in der gleichen Richtung, nämlich in Längsrichtung der Bruchlinie 66, gemessen. Wie Fig. 5 auch zeigt, besitzt der Befestigungsabschnitt 38 an der der Aufnahme 41 abgewandten Seite zwei Zapfen 50, die die Montage vereinfachen.

Wie Fig. 6 zeigt, besitzt die Kerbe 49 eine erste Seitenwand 63, die am Befestigungsabschnitt 38 ausgebildet ist sowie eine zweite Seitenwand 64, die benachbart zum Gewindeabschnitt 37 verläuft. Die beiden Seitenwände 63 und 64 schließen einen Winkel α ein, der deutlich kleiner als 90° ist. Der Winkel α beträgt vorteilhaft weniger als 45°. Im Ausführungsbeispiel beträgt der Winkel α näherungsweise 30°. Dadurch, dass die Seitenwände 63 und 64 in einem spitzen Winkel α zueinander verlaufen, wird eine gute Kerbwirkung am Fuß 68 der Kerbe 49 erreicht. Dadurch kann sichergestellt werden, dass das Halteelement 36 an der Kerbe 49 bricht, bevor andere Bauteile der Motorsäge 1 beschädigt werden.

Wie Fig. 6 zeigt, besitzt das Halteelement 36 am Befestigungsabschnitt 38 eine Breite d. Die Breite d ist größer als die Breite e des Halteelements 36. An der dem Befestigungsabschnitt 38 gegenüberliegenden Seite der Kerbe 49 besitzt das Halteelement 36 eine Breite f, die deutlich größer als die Breite d und die Breite e ist. Die Breite e beträgt vorteilhaft weniger als etwa 90%, insbesondere weniger als etwa 80% der Breite d. Die Breite f beträgt vorteilhaft mehr als etwa 120%, insbesondere mehr als etwa 150% der Breite d. Die Breite d, die Breite e und die Breite f sind dabei senkrecht zur Längsmittelachse 52 gemessen. Die Kerbe 49 ist damit an der schmalsten Stelle der Verbindung zwischen der Schraubenfeder 31 und dem Befestigungssteg 34 angeordnet (Fig. 3). Wie Fig. 6 auch zeigt, verläuft die Längsmittelachse 52 durch die Kerbe 49. Dadurch wird eine gute Krafteinleitung im Bereich der Sollbruchstelle erreicht.

Der Seitensteg 45 besitzt einen ersten Bereich 59, der an den Gewindeabschnitt 37 anschließt sowie einen zweiten Bereich 60, der dem Gewindeabschnitt 37 abgewandt liegt. Der zweite Bereich 60 ist gegenüber dem ersten Bereich 59 um einen Versatz c nach außen, also auf die dem Befestigungsabschnitt 38 abgewandte Seite versetzt. Dadurch ist die Aufnahme 41 benachbart zum ersten Bereich 59 oberhalb der Kerbe 49 schmaler als benachbart zum zweiten Bereich 60. Der Versatz c kann beispielsweise etwa 50% bis etwa 200% der Tiefe b der Kerbe 49 betragen.

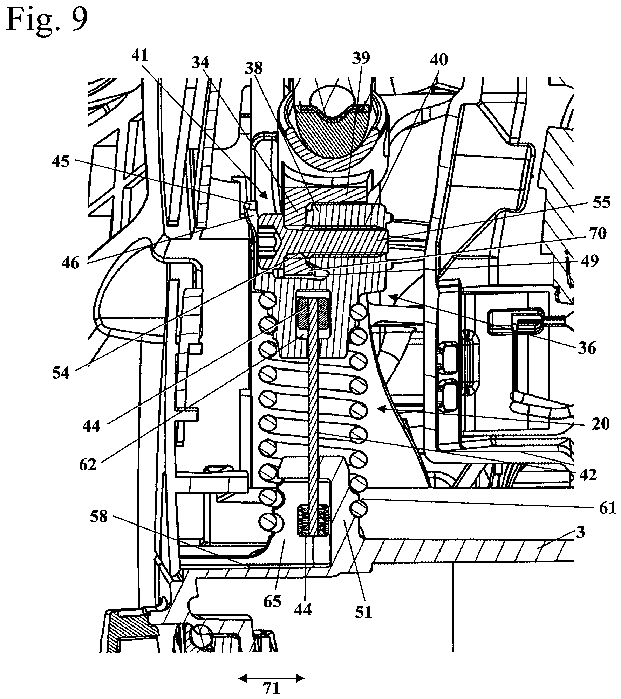

Wie Fig. 9 zeigt, dient zur Befestigung des Halteelements 36 eine Befestigungsschraube 55. Der Kopf der Befestigungsschraube 55 ragt teilweise in die Öffnung 46 im Seitensteg 45. Der Versatz c ist so gewählt, dass der zweite Bereich 60 nicht am Kopf der Befestigungsschraube 55 zur Auflage kommen kann, wenn das Halteelement 36 an der Kerbe 49 bricht. Dadurch ist sichergestellt, dass die Motoreinheit 16 bei einem Bruch des Halteelements 36 an der Sollbruchstelle nicht mehr über das Antivibrationselement 20 mit der Griffeinheit 2 verbunden ist.

Wie die Figuren 7 und 8 zeigen, besitzt das Halteelement 36 eine Gewindeöffnung 40, in die die Befestigungsschraube 55 eingeschraubt wird. Die senkrecht zur Längsmittelachse 69 der Gewindeöffnung 40 und senkrecht zur Längsmittelachse 52 des Antivibrationselements 20 gemessene Tiefe g des Halteelements 36 ist vom Gewindeabschnitt 37 bis zur Längsmittelachse 69 näherungsweise konstant. In diesem Bereich ist der Querschnitt des Halteelements 36 senkrecht zur Längsmittelachse 52 am Fuß 68 der Kerbe 49 am geringsten. Die Kerbe 49 erstreckt sich dabei, wie in Fig. 7 schematisch angezeichnet ist, über die gesamte Tiefe g des Halteelements 36. Der Außendurchmesser der Öffnung 46 ist deutlich größer als der Durchmesser der Gewindeöffnung 40. Wie Fig. 9 zeigt, ist der Durchmesser der Öffnung 46 etwas größer als der Durchmesser des Kopfes der Befestigungsschraube 55.

Wie Fig. 9 zeigt, ragt der Befestigungssteg 34 des Gehäuses 4 der Motorsäge 1 in die Aufnahme 41. Die Befestigungsschraube 55 ragt durch eine Durchgangsöffnung 54 im Befestigungssteg 34 und ist in die Gewindeöffnung 40 des Halteelements 36 eingeschraubt. Wie Fig. 9 auch zeigt, liegt das Dach 39 am Befestigungsabschnitt 38 des Halteelements 36 an. Der Befestigungssteg 34 besitzt einen unteren Rand 70, der in die Kerbe 49 eingreift und dadurch vor der Montage der Befestigungsschraube 55 eine Vorfixierung des Halteelements 36 am Befestigungssteg 34 bewirkt. In Fig. 9 ist auch ein Gewindeabschnitt 61 der Halteeinrichtung 51 sichtbar, in die die Schraubenfeder 31 eingeschraubt ist. Wie Fig. 9 auch zeigt, ist ein Nippel 44 der Abreißsicherung 42 in einem Schlitz 65 der Halteeinrichtung 51 gehalten. Der zweite Nippel 44 der Abreißsicherung 42 ist in einer Aufnahme 62 des Halteelements 36 angeordnet. Die Nippel 44 hintergreifen jeweils einen Abschnitt von Halteeinrichtung 51 oder Halteelement 36.

In Fig. 9 ist beispielhaft ein Doppelpfeil 71 eingezeichnet, der eine mögliche Querbelastung auf das Antivibrationselement 20 verdeutlicht. Im Betrieb kann der Bediener bei festgeklemmter Führungsschiene 9 Seitenkräfte auf den hinteren Handgriff 6 ausüben (Fig. 1) und dadurch den Kraftstofftank 3 in Richtung des Doppelpfeils 71 gegenüber dem Befestigungssteg 34 bewegen. Dadurch wirken Querkräfte auf das Antivibrationselement 20, die bei übermäßiger Belastung zu einem Bruch der Verbindung von Kraftstofftank 3 und Befestigungssteg 34 an der Stelle mit der geringsten Festigkeit, nämlich an der Kerbe 49, führen. Die Sollbruchstelle ist dabei vorteilhaft so ausgebildet, dass das Halteelement 36 an der Kerbe 49 abknickt. Wie Fig. 9 in Verbindung mit Fig. 3 zeigt, verläuft der Fuß 68 der Kerbe 49 (Fig. 6) etwa in Längsrichtung der Motorsäge 1. Der Fuß 68 verläuft vorteilhaft parallel zur Ebene der Führungsschiene 9 (Fig. 1).

## Patentansprüche

1. Handgeführte Arbeitsgerät mit einer Motoreinheit (16), die einen Antriebsmotor (11) umfasst, wobei der Antriebsmotor (11) mindestens ein Werkzeug des Arbeitsgeräts antreibt, und mit einer Griffeinheit (2), die mindestens einen Handgriff (6) umfasst, wobei die Griffeinheit (2) von der Motoreinheit (16) über mindestens ein Antivibrationselement (17, 18, 19, 20) schwingungsentkoppelt ist, wobei die Griffeinheit (2) ein erstes Bauteil und die Motoreinheit (16) ein zweites Bauteil umfasst, wobei das Antivibrationselement (20) über eine Halteeinrichtung (51) an dem ersten Bauteil und über ein Halteelement (36) an dem zweiten Bauteil festgelegt ist, und wobei in der Verbindung des ersten Bauteils mit dem zweiten Bauteil über das Antivibrationselement (20) eine Sollbruchstelle vorgesehen ist,
**dadurch gekennzeichnet, dass** die Sollbruchstelle an einem dritten Bauteil ausgebildet ist, das unabhängig von dem ersten Bauteil und dem zweiten Bauteil austauschbar ist, wobei die Verbindung des ersten Bauteils mit dem zweiten Bauteil über das Antivibrationselement (20) an der Sollbruchstelle die geringste Festigkeit aufweist.

2. Arbeitsgerät nach Anspruch 1,
**dadurch gekennzeichnet, dass** die Sollbruchstelle durch eine Kerbe (49) gebildet ist.

3. Arbeitsgerät nach Anspruch 2,
**dadurch gekennzeichnet, dass** die Längsmittelachse (52) des Antivibrationselements (20) in unbelastetem Zustand des Antivibrationselements durch die Kerbe (49) verläuft.

4. Arbeitsgerät nach Anspruch 2 oder 3,
**dadurch gekennzeichnet, dass** die Tiefe (b) der Kerbe (49) mindestens 20% der parallel zur Tiefe (b) der Kerbe (49) gemessenen Breite (a) eines an die Kerbe (49) angrenzenden Abschnitts des dritten Bauteils beträgt.

5. Arbeitsgerät nach einem der Ansprüche 1 bis 4,
**dadurch gekennzeichnet, dass** das Halteelement (36) an der Motoreinheit (16) lösbar fixiert ist, dass das Halteelement (36) die Sollbruchstelle aufweist, und dass die Festigkeit des Halteelements (36) an der Sollbruchstelle geringer als die Festigkeit der Halteeinrichtung (51) ist.

6. Arbeitsgerät nach Anspruch 5,
**dadurch gekennzeichnet, dass** das Halteelement (36) einen ersten Befestigungsabschnitt (38) zur Befestigung an der Motoreinheit (16) und einen zweiten Befestigungsabschnitt zur Befestigung an einem Dämpfungselement des Antivibrationselements (20) aufweist, wobei die Sollbruchstelle insbesondere zwischen dem ersten Befestigungsabschnitt (38) und dem zweiten Befestigungsabschnitt vorgesehen ist.

7. Arbeitsgerät nach einem der Ansprüche 1 bis 6,
**dadurch gekennzeichnet, dass** das Antivibrationselement (20) eine Schraubenfeder (31) umfasst und dass die Längsmittelachse (52) des Antivibrationselements (20) die Längsmittelachse der Schraubenfeder (31) ist, wobei der zweite Befestigungsabschnitt insbesondere ein Gewindeabschnitt (37) ist, der ein Außengewinde (53) trägt und der vorteilhaft in die Schraubenfeder (20) eingeschraubt ist.

8. Arbeitsgerät nach Anspruch 6 oder 7,
**dadurch gekennzeichnet, dass** das Halteelement (36) eine schlitzförmige Aufnahme (41) besitzt, in die ein Befestigungssteg (34) der Motoreinheit (16) ragt.

9. Arbeitsgerät nach Anspruch 8,
**dadurch gekennzeichnet, dass** der Befestigungssteg (34) ein Dach (39) besitzt, das das Halteelement (36) mindestens teilweise übergreift.

10. Arbeitsgerät nach Anspruch 8 oder 9,
**dadurch gekennzeichnet, dass** die Aufnahme (41) von dem Befestigungsabschnitt (38) begrenzt wird, wobei die Kerbe (49) sich von der der Aufnahme (41) zugewandten Seite des Befestigungsabschnitts (38) in das Halteelement (36) erstreckt.

11. Arbeitsgerät nach einem der Ansprüche 8 bis 10,
**dadurch gekennzeichnet, dass** die Aufnahme (41) an der dem ersten Befestigungsabschnitt (38) gegenüberliegenden Seite von einem Seitensteg (45) begrenzt ist, wobei der Seitensteg (45) eine Öffnung (46) aufweist, durch die ein Befestigungselement ragt, wobei der Seitensteg (45) einen ersten, dem zweiten Befestigungsabschnitt (38) zugewandten Bereich (59) und einen zweiten, dem zweiten Befestigungsabschnitt abgewandten Bereich (60) besitzt, und wobei der zweite Bereich (60) des Seitenstegs (45) gegenüber dem ersten Bereich (59) auf die dem ersten Befestigungsabschnitt (38) abgewandte Seite versetzt ist.

12. Arbeitsgerät nach einem der Ansprüche 4 bis 11,
**dadurch gekennzeichnet, dass** das Halteelement (36) eine Aufnahme (62) für eine Abreißsicherung (42) aufweist.

13. Arbeitsgerät nach einem der Ansprüche 4 bis 12,
**dadurch gekennzeichnet, dass** die Halteeinrichtung (51) einen in die Schraubenfeder (20) eingeschraubten Gewindeabschnitt (61) umfasst.

14. Arbeitsgerät nach einem der Ansprüche 4 bis 13,
**dadurch gekennzeichnet, dass** die Griffeinheit (2) einen Betriebsmitteltank umfasst, der das erste Bauteil, an dem das Antivibrationselement (20) festgelegt ist, bildet, und dass die Halteeinrichtung (51) an dem Betriebsmitteltank ausgebildet ist.

15. Arbeitsgerät nach Anspruch 14,
**dadurch gekennzeichnet, dass** die Halteeinrichtung (51) an einer in einer Abstellposition (56) des Arbeitsgeräts nach oben weisenden Oberseite (58) des Betriebsmitteltanks angeordnet ist.

16. Arbeitsgerät nach einem der Ansprüche 13 bis 15,
**dadurch gekennzeichnet, dass** der Betriebsmitteltank benachbart zu einem hinteren Handgriff (6) des Arbeitsgeräts angeordnet ist.

## Claims

1. Handheld work apparatus having a motor unit (16) which comprises a drive motor (11), wherein the drive motor (11) drives at least one tool of the work apparatus, and having a grip unit (2) which comprises at least one handle (6), wherein the grip unit (2) is vibrationally decoupled from the motor unit (16) via at least one anti-vibration element (17, 18, 19, 20), wherein the grip unit (2) comprises a first component and the motor unit (16) comprises a second component, wherein the anti-vibration element (20) is connected to the first component via a holding device (51) and to the second component via a holding element (36), and wherein a predetermined breaking point is provided in the connection of the first component to the second component via the anti-vibration element (20),
**characterised in that** the predetermined breaking point is formed on a third component that is replaceable independently of the first component and the second component, wherein the strength of the connection of the first component to the second component via the anti-vibration element (20) is lowest at the predetermined breaking point.

2. Work apparatus according to claim 1,
**characterised in that** the predetermined breaking point is formed by a notch (49).

3. Work apparatus according to claim 2,
**characterised in that** the central longitudinal axis (52) of the anti-vibration element (20) extends through the notch (49) in the unloaded state of the anti-vibration element.

4. Work apparatus according to claim 2 or 3,
**characterised in that** the depth (b) of the notch (49) is at least 20% of the width (a), measured parallel to the depth (b) of the notch (49), of a portion of the third component adjacent to the notch (49).

5. Work apparatus according to one of claims 1 to 4,
**characterised in that** the holding element (36) is releasably connected to the motor unit (16), the holding element (36) has the predetermined breaking point and the strength of the holding element (36) is lower at the predetermined breaking point than the strength of the holding device (51).

6. Work apparatus according to claim 5,
**characterised in that** the holding element (36) has a first fastening portion (38) for fastening to the motor unit (16) and a second fastening portion for fastening to a damping element of the anti-vibration element (20), wherein the predetermined breaking point is provided in particular between the first fastening portion (38) and the second fastening portion.

7. Work apparatus according to one of claims 1 to 6,
**characterised in that** the anti-vibration element (20) comprises a helical spring (31) and the central longitudinal axis (52) of the anti-vibration element (20) is the central longitudinal axis of the helical spring (31), wherein the second fastening portion is in particular a threaded portion (37) which carries an external thread (53) and is advantageously screwed into the helical spring (20).

8. Work apparatus according to claim 6 or 7,
**characterised in that** the holding element (36) has a slot-like receptacle (41), into which a fastening web (34) of the motor unit (16) projects.

9. Work apparatus according to claim 8,
**characterised in that** the fastening web (34) has a roof (39) which engages at least partially over the holding element (36).

10. Work apparatus according to claim 8 or 9,
**characterised in that** the receptacle (41) is defined by the fastening portion (38), wherein the notch (49) extends from that side of the fastening portion (38) facing the receptacle (41) into the holding element (36).

11. Work apparatus according to one of claims 8 to 10,
**characterised in that** the receptacle (41) is defined at the side lying opposite the first fastening portion (38) by a lateral web (45), wherein the lateral web (45) has an opening (46), through which a fastening element projects, wherein the lateral web (45) has a first region (59) facing the second fastening portion (38) and a second region (60) facing away from the second fastening portion, and wherein the second region (60) of the lateral web (45) is offset with respect to the first region (59) on the side facing away from the first fastening portion (38).

12. Work apparatus according to one of claims 4 to 11,
**characterised in that** the holding element (36) has a receptacle (62) for a breakaway device (42).

13. Work apparatus according to one of claims 4 to 12,
**characterised in that** the holding device (51) comprises a threaded portion (42) screwed into the helical spring (20).

14. Work apparatus according to one of claims 4 to 13,
**characterised in that** the grip unit (2) comprises an operating medium tank, which forms the first component, to which the anti-vibration element (20) is connected, and the holding device (51) is formed on the operating medium tank.

15. Work apparatus according to claim 14,
**characterised in that** the holding device (51) is arranged at a top side (58) of the operating medium tank directed upwards in a resting position (56) of the work apparatus.

16. Work apparatus according to one of claims 13 to 15,
**characterised in that** the operating medium tank is arranged next to a rear handle (6) of the work apparatus.

## Revendications

1. Instrument de travail portatif avec une unité à moteur (16) qui comprend un moteur d'entraînement (11), le moteur d'entraînement entraînant au moins un outil de l'instrument de travail, et avec une unité à poignée (2) qui comprend au moins une poignée (6), l'unité à poignée (2) étant protégée des vibrations de l'unité à moteur (16) par l'intermédiaire d'au moins un élément antivibrations (17, 18, 19, 20), l'unité à poignée (2) comprenant un premier composant tandis que l'unité à moteur (16) comprend un deuxième composant, l'élément antivibrations (20) étant fixé par l'intermédiaire d'un dispositif de retenue (51) au premier composant, et par l'intermédiaire d'un élément de retenue (36) au deuxième composant, et un point de rupture étant prévu dans la liaison du premier composant avec le deuxième composant par l'intermédiaire de l'élément antivibrations (20),
**caractérisé en ce que** le point de rupture est formé sur un troisième composant, qui est apte à être remplacé indépendamment du premier composant et du deuxième composant, la liaison du premier composant avec le deuxième composant par l'intermédiaire de l'élément antivibrations (20) présentant au niveau du point de rupture la solidité minimale.

2. Instrument de travail selon la revendication 1,
**caractérisé en ce que** le point de rupture est formé par une encoche (49).

3. Instrument de travail selon la revendication 2,
**caractérisé en ce que** l'axe longitudinal médian (52) de l'élément antivibrations (20), à l'état non contraint de l'élément antivibrations, traverse l'encoche (49).

4. Instrument de travail selon la revendication 2 ou 3,
**caractérisé en ce que** la profondeur (b) de l'encoche (49) représente au moins 20% de la largeur (a), mesurée parallèlement à la profondeur (b) de l'encoche (49), d'une section du troisième composant voisine de l'encoche (49).

5. Instrument de travail selon l'une des revendications 1 à 4,
**caractérisé en ce que** l'élément de retenue (36) est fixé de manière amovible à l'unité à moteur (16), **en ce que** l'élément de retenue (36) présente le point de rupture, et **en ce que** la solidité de l'élément de retenue (36) au niveau du point de rupture est inférieure à la solidité du dispositif de retenue (51).

6. Instrument de travail selon la revendication 5,
**caractérisé en ce que** l'élément de retenue (36) comporte une première section de fixation (38) pour la fixation à l'unité à moteur (16), et une deuxième section de fixation pour la fixation à un élément d'amortissement de l'élément antivibrations (20), le point de rupture étant prévu en particulier entre la première section de fixation (38) et la deuxième section de fixation.

7. Instrument de travail selon l'une des revendications 1 à 6,
**caractérisé en ce que** l'élément antivibrations (20) comprend un ressort hélicoïdal (31), et **en ce que** l'axe longitudinal médian (52) de l'élément antivibrations (20) est constitué par l'axe longitudinal médian du ressort hélicoïdal (31), la deuxième section de fixation étant constituée en particulier par une section filetée (37) qui porte un filetage extérieur (53) et qui est avantageusement vissée dans le ressort hélicoïdal (20).

8. Instrument de travail selon la revendication 6 ou 7,
**caractérisé en ce que** l'élément de retenue (36) présente un logement en forme de fente (41) dans lequel dépasse une patte de fixation (34) de l'unité à moteur (16).

9. Instrument de travail selon la revendication 8,
**caractérisé en ce que** la patte de fixation (34) présente une couronne (39) qui couvre au moins en partie l'élément de retenue (36).

10. Instrument de travail selon la revendication 8 ou 9,
**caractérisé en ce que** le logement (41) est limité par la section de fixation (38), l'encoche (49) s'étendant du côté de la section de fixation (38) tourné vers le logement (41), jusque dans l'élément de retenue (36).

11. Instrument de travail selon l'une des revendications 8 à 10,
**caractérisé en ce que** le logement (41) est limité, sur son côté qui fait face à la première section de fixation (38), par une branche latérale (45), la branche latérale (45) présentant une ouverture (46) à travers laquelle passe un élément de fixation, la branche latérale (45) présentant une première zone (59), tournée vers la deuxième section de fixation (38), et une deuxième zone (60), opposée à la deuxième section de fixation, et la deuxième zone (60) de la branche latérale (45) étant décalée par rapport à la première zone (49) vers le côté opposé à la première section de fixation (38).

12. Instrument de travail selon l'une des revendications 4 à 11,
**caractérisé en ce que** l'élément de retenue (36) présente un logement (62) pour une protection anti-arrachement (42).

13. Instrument de travail selon l'une des revendications 4 à 12,
**caractérisé en ce que** le dispositif de retenue (51) comprend une section filetée (61) vissée dans le ressort hélicoïdal (20).

14. Instrument de travail selon l'une des revendications 4 à 13,
**caractérisé en ce que** l'unité à poignée (2) comprend un réservoir de fluide moteur qui forme le premier composant auquel l'élément antivibrations (20) est fixé, et **en ce que** le dispositif de retenue (51) est formé sur le réservoir de fluide moteur.

15. Instrument de travail selon la revendication 14,
**caractérisé en ce que** le dispositif de retenue (51) est disposé sur un côté supérieur (58), dirigé vers le haut dans une position posée (56) de l'instrument de travail, du réservoir de fluide moteur.

16. Instrument de travail selon l'une des revendications 13 à 15,
**caractérisé en ce que** le réservoir de fluide moteur est disposé près d'une poignée arrière (6) de l'instrument de travail.
